# EUROPÄISCHE PATENTSCHRIFT

(11) **EP 0 613 485 B1**
(45) Veröffentlichungstag und Bekanntmachung des Hinweises auf die Patenterteilung: **25.03.1998**
(21) Anmeldenummer: 92923330.2
(22) Anmeldetag: 06.11.1992
(51) Int. Cl.: C08F 214/18

(54) **THERMOPLASTISCHE FLUORCOPOLYMERE UND VERFAHREN ZUR HERSTELLEN DES FLUORMONOMERS ZUM EINSATZ BEI DER HERSTELLUNG DES FLUOROCOPOLYMERS**
THERMOPLASTIC FLUOROCOPOLYMERS, AND METHOD OF PREPARING FLUOROMONOMER FOR USE IN THE MANUFACTURE OF THE FLUOROCOPOLYMER
FLUOROCOPOLYMERES THERMOPLASTIQUES ET PROCEDE DE PREPARATION D'UN DES FLUOROMONOMERES UTILISES POUR PREPARER LESDITS FLUOROCOPOLYMERES

(30) Priorität: 19.11.1991 DE 4137967
(43) Veröffentlichungstag der Anmeldung: 07.09.1994
(73) Patentinhaber: BAYER AG, 51368 Leverkusen (DE)
(72) Erfinder: KRÜGER, Ralf, D-5060 Bergisch-Gladbach 1 (DE); PIEJKO, Karl-Erwin, D-5060 Bergisch Gladbach 2 (DE); NEGELE, Michael, Dr., D-42697 Solingen (DE); EISELE, Ulrich, D-5090 Leverkusen (DE); MARHOLD, Albrecht, D-5090 Leverkusen (DE)
(86) Internationale Anmeldenummer: EP9202557
(87) Internationale Veröffentlichungsnummer: WO9310160

(56) Entgegenhaltungen:
- EP-A- 0 002 809
- EP-A- 0 130 052
- US-A- 3 083 238

## Beschreibung

Die vorliegende Erfindung betrifft Fluorpolymere mit verbesserter Temperaturbestandigkeit und Wärmeformbeständigkeit auf Basis von Fluorethylenen, wobei als Comonomere Perfluor-(cycloalkyl-vinylether) und gegebenenfalls weitere Comonomere eingesetzt werden. Gegenstand der vorliegenden Erfindung ist ein Verfahren zur Herstellung der neuen thermoplastischen Fluorcopolymere.

Fluorpolymere werden in der Technik immer dann eingesetzt, wenn besondere Eigenschaften, wie niedrige Oberflächenspannung, hohe Chemikalien-, Öl- und Lösungsmittelbeständigkeit oder extreme Anforderungen an die (Hitze-) Alterungsstabilität verlangt werden.

Als größter Massenkunststoff auf dem Gebiet der Fluorpolymere vereinigt das Polytetrafluorethylen (PTFE) die genannten Eigenschaften in hervorragender Weise. Jedoch läßt sich PTFE bekanntermaßen thermoplastisch nicht verarbeiten. Eine Verbesserung der thermoplastischen Verarbeitbarkeit erreicht man durch die Einführung von Comonomeren, die die Viskosität des Polymeren oberhalb des Erweichungspunktes (Schmelzpunkt bei teilkristallinen Systemen) herabsetzen, und damit den Schmelzfluß verbessern. Solche Comonomere sind beispielsweise Hexafluorpropen und Perfluorierte acyclische Alkyl-vinylether (US-A 3 180 895). Meistens wird aber durch Einführung solcher Comonomerer der Erweichungspunkt des Copolymeren selbst abgesenkt, so daß die Verleihung der thermoplastischen Verarbeitbarkeit zu Lasten der Temperaturstabilität des Polymeren geht.

Andere fluorhaltige Homopolymerisate wie das Polyvinylidenfluorid oder das Polychlortrifluorethylen sind zwar thermoplastisch verarbeitbar, erreichen aber wegen ihres geringen Fluorgehaltes bei den o.g. Eigenschaften oft nicht das Niveau, das von höchst fluorierten (Co-)Polymeren erreicht wird.

Aufgabe der vorliegenden Erfindung ist es, neue thermoplastisch verarbeitbare Fluorcopolymerisate mit erhöhter Temperatur- und Wärmeformbeständigkeit auf Basis Fluor enthaltender Ethylene als des einen Comonomeren zur Verfügung zu stellen.

Es wurde gefunden, daß es gelingt, durch Copolymerisation von fluorhaltigen Ethylenen mit Perfluor-(cycloalkyl-vinylethern) der nachfolgenden Formel I thermoplastische Copolymere mit erhöhter Temperatur- und Warmeformbeständigkeit herzustellen.

Verbindungen der Formel I sind 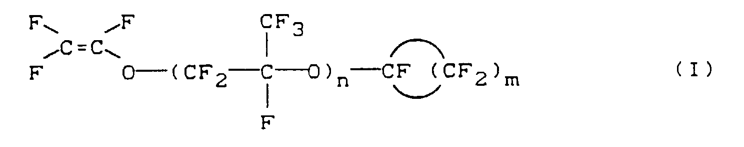 mit
n = 0,1 oder 2
m = 3, 4 oder 5.

Zur Modifizierung der Eigenschaften der erfindungsgemäßen Fluorcopolymeren können weitere Comonomere zur Copolymerisation eingesetzt werden. Hierzu gehören insbesondere gradkettige oder verzweigte C₃ bis C₈-Alkene mit mindestens einem Fluoratom oder fluorfreies Ethylen beziehungsweise Propylen.

Gegenstand der vorliegenden Erfindung sind demgemäß thermoplastische Fluorcopolymere, die erhalten wurden durch Copolymerisation von
a) 99,5 bis 50 Mol-% mindestens eines Ethylens mit 1 bis 4 Fluoratomen, und
b) 0,5 bis 50 Mol-% mindestens eines Perfluor-(cycloalkyl-vinylethers) der Formel I sowie
c) 0 - 40 Mol-% mindestens eines weiteren Comonomeren aus der Gruppe von Ethylen, Propylen und mindestens ein Fluoratom enthaltenden gradkettigen oder verzweigten C₃- bis C₈-Alkenen.

Bevorzugt beträgt das molare Verhältnis von Fluorethylenen zu Perfluor-(cycloalkyl-vinylethern) in dem erfindungsgemäßen Fluorcopolymeren zwischen 1 und 50, besonders bevorzugt zwischen 2 und 20.

Als mindestens 1 Fluoratom enthaltende Ethylene (Komponente a)) kommen Tetrafluorethylen, Trifluorethylen, Vinylidenfluorid, Monofluorethylen oder Chlortrifluorethylen in Frage. Bevorzugt werden Tetrafluorethylen oder Vinylidenfluorid eingesetzt.

Von den Perfluor-(cycloalkyl-vinylethern) gemäß Formel I sind solche mit n = 0 bevorzugt. Erfindungsgemäß besonders bevorzugt ist der Perfluor-(cyclopentyl-vinylether), das heißt gemäß Formel I ist n = 0 und m = 4.

Die erfindungsgemäßen Perfluor-(vinyl-cycloalkyl)-ether werden aus 2-Cycloalkoxypropancarbonsäurefluoriden (erhältlich gemäß US-A 3 274 239) hergestellt. Sie sind im Prinzip erhältlich durch Überführung in ihre Alkalimetallsalze und anschließende Decarboxylierung bei 170 bis 250°C, wie in US-A 3 274 239 beschrieben. Dabei entstehen allerdings als Nebenprodukt erhebliche Mengen an 1,1,1,2-Tetrafluorethylcycloalkylethern, die nur schwer und unter Inkaufnahme hoher Ausbeuteverluste entfernt werden können. Reste solcher Nebenprodukte stören die Copolymerisation erheblich und führen zu Fluorcopolymeren mit unzureichenden mechanischen und thermischen Eigenschaften. Die genannten Schwierigkeiten, Perfluor(cycloalkyl-vinylether) in einer für die Copolymerisation mit Fluorethylenen geeigneten Form herzustellen, sind als Grund dafür anzusehen, daß diese bisher in Fluorpolymeren nicht eingesetzt wurden.

Es wurde nun gefunden, daß es bei der Herstellung der erfindungsgemäßen thermoplastischen Fluorcopolymere besonders günstig ist. wenn die als Komponente b) eingesetzten Perfluor(-vinyl-cycloalkyl)-ether in einem analog dem in der EP-A 260 773 offenbarten Verfahren aus 2-Cycloalkoxypropancarbonsäurefluorid hergestellt wurden.

Gegenstand der vorliegenden Erfindung ist daher zudem ein Verfahren zur Herstellung der erfindungsgemäßen Fluorcopolymere, wonach der als Komponente b) eingesetzte Perfluor-(cycloalkylvinylether) der Formel I hergestellt aus den entsprechenden 2-Cycloalkoxypropancarbonsäurefluoriden gemäß der nachfolgenden Formel II 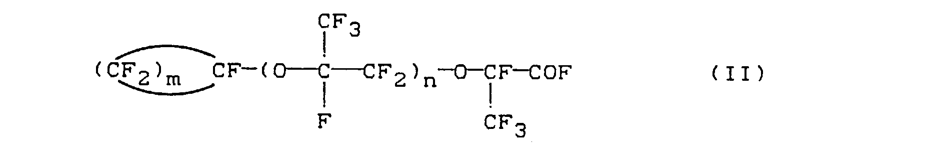 in dem diese in einem geeigneten Lösungsmittel das ein salzbildendes Mittel enthält. in Gegenwart einer katalytischen Menge von N,N-Dimethylformamid langsam bis zu einer Temperatur von 110 - 140°C erhitzt wird. bei einer Temperatur ab 100 - 120°C ein Destillat entsprechend einer Kondensationstemperatur zwischen 60 und 90°C abgezogen wird, und das Destillat bei Normaldruck redestilliert wird.

Als Lösungsmittel wird bevorzugt Diglyme (Diethylenglykoldimethylether) eingesetzt. Bevorzugt wird als salzbildendes Mittel wasserfreies Kaliumcarbonat eingesetzt. Das salzbildende Mittel wird vorzugsweise in einem 1,1 - 1,3 molaren Überschuß bezogen auf Perfluor-2-cycloalkoxy-propancarbonsäurefluorid eingesetzt. Dimethylformamid wird vorzugsweise in Mengen von 1 - 5 Gew.-% bezogen auf das Lösungsmittel eingesetzt. Wesentlich ist eine absolut wasserfreie Arbeitsweise.

Zur Herstellung der erfindungsgemäßen Copolymerisate können die für die Copolymerisation fluorhaltiger Monomerer bekannten radikalischen Verfahren herangezogen werden; es kann in Lösung, Suspension oder Emulsion copolymerisiert werden (US 2.968.649; US 3.051.677; US 3.053.818; US 3.331.823; US 3.335.106 mit beispielhafter Angabe der in Frage kommenden Reaktionsmedien und allgemeinen Reaktionsbedingungen). Zur Initiierung der radikalischen Copolymerisation werden grundsätzlich bekannte und für das jeweilige Reaktionsmedium geeignete Verbindungen eingesetzt. So verwendet man bei der Lösungs- und Suspensionspolymerisation organische, öllösliche Peroxide, die auch fluoriert sein können, wie Benzoylperoxid, Trifluoracetylperoxid oder organische lösliche Azoverbindungen, wie Azobisisobutyronitril. Bei der Emulsionspolymerisation, die für die Herstellung der erfindungsggemäßen Copolymere bevorzugt wird, werden wasserlösliche anorganische Perverbindungen als Initiatoren benutzt, wie Persulfate, Perborate, Percarbonate etc., im allgemeinen in Form ihrer Natrium-oder Ammoniumsalze.

In Abhängigkeit von der Polymerisationstemperatur und von der Zerfallskonstante des Initiators müssen bei Anwendung niederer Temperaturen zur Polymerisation Zerfallsbeschleuniger, in der Regel Reduktionsmittel, zusätzlich eingesetzt werden. Als solche können dienen: Schwefelverbindungen, wie etwa Natriumsulfit, Natriumpyrosulfit oder Rongalit C (Natriumformamidinsulfinsäure), weiterhin organische Reduktionsmittel, wie Ascorbinsäure, Metallsalze, wie Eisen (II)- oder Kobalt(11)-salze, metallorganische Verbindungen etc.

Die Reaktionstemperaturen für die Copolymerisation liegen zwischen -15 und +120°C, bevorzugt bei 20 bis 90°C.

Um das Molekulargewicht der entstehenden Polymeren einzustellen, können Kettenübertragungsmittel, wie Methanol, Isopropanol, Isopentan, Ethylacetat, Diethylmalonat und Tetrachlorkohlenstoff erforderlichenfalls eingesetzt werden.

Es ist ein weiteres Kennzeichen des erfindungsgemäßen Verfahrens, daß die Copolymerisation unter einem erhöhtem Druck durchgeführt wird. Dieser Druck soll mindestens 5 bar betragen, braucht aber den Wert von 100 bar nicht zu überschreiten.

Ein für das erfindungsgemäße Verfahren bevorzugter Bereich ist 5 bis 65 bar.

Die Herstellung der erfindungsgemäßen Copolymerisate kann absatzweise, bevorzugt aber nach halbkontinuierlichen oder kontinuierlichen Verfahren erfolgen.

Es werden lineare Copolymere mit Molekulargewichten von 10³ bis 10⁶ g/Mol erhalten.

Die Erfindung wird anhand der nachfolgenden Beispiele näher erläutert:

### Beispiel 1

### a) Herstellung von Perfluor-2-cyclopentoxypropancarbonsäurefluorid

In 500 ml Diglyme werden 150 g (2,59 Mol) geglühtes Kaliumfluorid suspendiert und unter Rühren bei ca. 5°C innerhalb von 1 h 456 g (2,0 Mol) Octafluorcyclopentanon einkondensiert. Nach Abklingen der leicht exothermen Reaktion wird erneut auf ca. 5°C gekühlt und Hexafluorpropenoxid so rasch eingeleitet, daß am Trockeneiskühler nur schwacher Rückfluß auftritt. Nachdem 330 g (1,99 Mol) Hexafluorpropenoxid eingeleitet wurden (ca. 60 g/h) wird 1 h bei 5°C und über Nacht bei Raumtemperatur nachgerührt.

Anschließend wird unter vermindertem Druck (bis 20 mbar) das Produkt abdestilliert (Kp. bis 60°C), in der gekühlten Vorlage wird ein zweiphasiges Destillat aufgefangen. Die Oberphase besteht zu ca. 90 % aus Diglyme, die Unterphase (ca. 80 %ig an Produkt) kann ohne weitere Reinigung in die nächste Stufe eingesetzt werden.

Zur Charakterisierung und Ausbeutebestimmung wird das Rohprodukt (Unterphase) bei Normaldruck über eine kurze Kolonne redestilliert.

### b) Überführung in Perfluorcyclopentylvinylether

In 200 ml absolutem Diglyme werden 175 g (1,26 Mol) gepulvertes wasserfreies Kaliumcarbonat und 3 ml Dimethylformamid vorgelegt und bei Raumtemperatur in 1 h 394 g (1,0 Mol) Perfluor-2-cyclopentoxypropancarbonsäurefluorid zugetropft. Leicht exotherm (bis ca. 35°C), nach vollendeter Zugabe wird langsam auf 60°C, 80°C und 110°C erhitzt (jeweils ca. 1 h, ab 80°C leichter Rückfluß und CO₂-Abspaltung, ab 110°C kann über eine Brücke ein Destillat abgezogen werden). Die Sumpftemperatur wird auf max. 130°C erhöht, die Kopftemperatur des Destillats schwankt zwischen 65 - 85°C. Das Rohprodukt (280 g) wird über eine 40 cm-Kolonne bei Normaldruck redestilliert:
Hauptfraktion Kp₁₀₁₃: 80 - 82°C
Ausbeute: 255 g (78 % d. Th.)
(GC-)MS: m/ₑ = 328 (Molpeak)
19_{F-NMR}: δ =
   - 35,0 ppm (2d, 1F, J_{F-F} = 83 u. 65 Hz, CF = C-O cis);
   - 42,1 ppm (4m, 1F, J_{F-F} = 111,83 u. 6 Hz, CF = C-O trans);
   - 51,1 ppm (pseudo-quartett (AA'BB'-System höherer Ordnung), 4F, "J" = 258 Hz, 2CF₂);
   - 52,5 ppm (pseudo-quartett (AA'BB'-System höherer Ordnung), 4F, "J" = 258 Hz, 2CF₂);
   - 56,5 ppm (4m, 1F, J_{F-F} = 111,65 u. 6 Hz, = CFO) und
   - 58,8 ppm (m, 1F, OCF) (gg. ext. CF₃COOH).
Der Gehalt an 1,1,1,2-Tetrafluorethylperfluorcyclopentylvinylether ist lt. GC < 2 %.

Der nach diesem Beispiel hergestellte Perfluor-(cyclopentylvinylether) wurde in den Polymerisationsbeispielen 3, 4, 5 und 6 eingesetzt.

### Vergleichsbeispiel 1b

### Überführung analog Verfahren der US-A 3 274 239

394 g (1,0 mol) Perfluor-2-cyclopentoxypropancarbonsäurefluorid werden in 300 ml Dioxan gelöst und mit 40,5 g Natriumhydroxid in 100 ml H₂O gegen Phenolphthalein alkalisch gestellt. Anschließend wird das Lösungsmittel im Wasserstrahlvakuum entfernt und das verbleibende Salz getrocknet. Das trockene Salz wird dann im Ölpumpenvakuum (0,3 mbar) thermisch (170 -250°C) zersetzt und die Reaktionsgase in einer auf -78°C gekühlten Falle kondensiert.

Dieses Rohprodukt (295 g) hat eine GC-Reinheit von 55 % (45 % 1,1,1,2-Tetrafluorethyltrifluorvinylether) und kann destillativ nicht über 90 % angereichert werden.

Ein Polymerisationsversuch mit dem Rohprodukt beziehungsweise mit dem angereicherten Produkt führte bei sehr geringen Ausbeuten zu verfärbten Produkten, wie Vergleichsbeispiel 6 zeigt.

### Beispiel 2

### Herstellung von Perfluorcyclobutylvinylether

Analog Beispiel 1b) werden 69 g (0,2 mol) Perfluor-2-cyclobutoxypropancarbonsaurefluorid (hergestellt aus Perfluorcyclobutanon und Hexafluorpropenoxid analog Beispiel 1a) wobei das Perfluorcyclobutanon (des nach J. Chem. Soc. 7370 (1965) aus 1-Methoxy-pentafluorcyclobut-1-en und elementarem Fluor und anschließender Hydrolyse des Methylcyclobutylethers erhalten wurde) mit K₂CO₃ umgesetzt wird.
Ausbeute: 41 g Perfluorbutylvinylether = 74 % d. Th.
Kp_{ND}: 59 - 60°C

Lt. GC/MS Gehalt an 1,1,1,2-Tetrafluorethylperfluorcyclobutylether < 3 %.

### Beispiel 3

### Herstellung eines Vinylidenfluorid/Perfluor-(cyclopentylvinylether)-Copolymerisates

In einem 0,7 l-Autoklaven wurden 250 ml entionisiertes Wasser vorgelegt. Darin wurden 3,9 g Natriumperfluoroctanoat und 3,0 g kaliumperoxidisulfat gelöst. Mit Natriumhydroxid wurde diese Lösung auf einen pH-Wert von etwa 10 eingestellt. Dann wurde der geschlossene Autoklav dreimal jeweils mit einem Stickstoffdruck von 10 bar beaufschlagt und anschließend auf Normaldruck entspannt.

In den Autoklaven wurden 36 g Perfluor-(cyclopentyl-vinylether) und 64 Vinylidenfluorid gegeben und das Reaktionsgemisch unter Rühren auf 50°C erwärmt. Nach einer Stunde Reaktionszeit bei dieser Temperatur wurde begonnen, innerhalb von 10 h 50 ml einer wässrigen Lösung, die 1 g Ascorbinsäure, 5 mg Eisen(II)sulfat und 1,5 g Natriumhydroxid enthält, gleichmäßig zuzupumpen. Nach Ablauf dieser Zeit, in der der Reaktionsdruck von 42 bar auf 13 bar abnahm, wurde der Autoklaveninhalt abgekühlt und das nicht umgesetzte Gasgemisch abgelüftet. Das so erhaltene Reaktionsgemisch wurde zur vollständigen Koagulation in 300 ml einer 4 %igen wässrigen Magnesiumsulfatlösung gegossen. Das Produkt wurde mit Wasser gewaschen und dann getrocknet, wobei man 81 g eines weißen Pulvers erhielt, das als Copolymeres bestehend aus Einheiten von Vinylidenfluorid und Perfluor-(cyclopentylvinylether) identifiziert wurde. Das Copolymer ist in Dimethylformamid und Dimethylacetamid löslich. Die Grenzviskosität beträgt 0,2 dl/g (DMF, 25°C). Das molare Verhältnis von Vinylidenfluorid zu Perfluor-(cyclopentyl-vinylether) im Copolymeren wurde durch ¹⁹F-Kernresonanzspektroskopie bestimmt und beträgt 91 : 9.

Dabei wurden in Dimethylformamid-d₇ gegen den Standard Trifluoressigsäure folgende chemische Verschiebungen gefunden und ausgewertet: 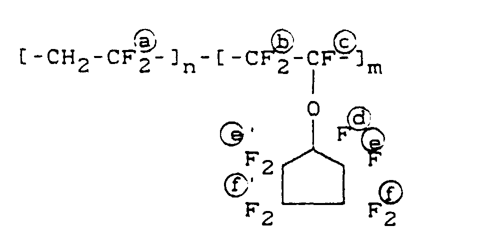
a: -14; -16; -17; -46 ppm
b: -42 ppm
c: -43 ppm
d: -52 ppm
e,e' :-30; -35; -53; -59 ppm
f,f':-32; -38; -49; -55 ppm

### Vergleichsbeispiel 3

### Herstellung einer Vinylidenfluorid/Perfluor-(n-propylvinylether)-Copolymerisates

Analog der im Beispiel 3 beschriebenen Verfahrensweise wurden 32 g Perfluor-(n-propyl-vinylether) und 68 g Vinylidenfluorid copolymerisiert. Es wurden 72 g eines Copolymeren, das aus Einheiten von Vinylidenfluorid und Perfluor-(n-propyl-vinylether) besteht, isoliert. Das Copolymer ist in Dimethylformamid und Dimethylacetamid löslich. Die Grenzviskosität beträgt 0,81 dl/g (DMF, 25°C). Die chemische Zusammensetzung wurde durch ¹⁹F-Kernresonanzspektroskopie bestimmt. Das molare Verhältnis von Vinylidenfluorid zu Perfluor-(n-propyl-vinylether) beträgt 91 : 9.

### Beispiel 4

In einem 0,3 l-Autoklaven wurden 110 ml entionisiertes Wasser vorgelegt. Darin wurden 1,8 g Natriumperfluoroctanoat gelöst. Mit Natriumhydroxid wurde diese Lösung auf einen pH-Wert von etwa 10 eingestellt. Dann wurde der geschlossene Autoklav dreimal jeweils anschließend auf Normaldruck entspannt. In den Autoklaven wurden 9 g Perfluor-(cyclopentyl-vinylether) und 21 g Vinylidenfluorid gegeben und das Reaktionsgemisch unter Rühren auf 80°C erwärmt. Nach Erreichen dieser Temperatur wurden 20 g einer wässrigen Lösung, die 0,7 g Ammoniumperoxidsulfat enthält, in den Autoklaven gedrückt. Nach einer Gesamtreaktionszeit von 7 h, in der der Reaktionsdruck von 38 auf 15 bar abnahm, wurde der Autoklaveninhalt abgekühlt und das nicht umgesetzte Gasgemisch abgelüftet. Die so erhaltene Emulsion wurde zur vollständigen Koagulation in 130 ml einer 4 %igen wässrigen Magnesiumsulfatlösung gegossen. Das Produkt wurde mit Wasser gewaschen und dann getrocknet, wobei man 19 g eines Copolymeren (weißes Pulver) bestehend aus Einheiten von Vinylidenfluorid und Perfluor-(cyclopentylvinylether) erhielt. Das Copolymer ist in Dimethylformamid und Dimethylacetamid löslich. Die Grenzviskosität beträgt 0,2 dl/g (DMF, 25°C). Die chemische Zusammensetzung wurde durch ¹⁹F-Kernresonanzspektroskopie bestimmt. Das molare Verhältnis von Vinylidenfluorid zu Perfluor-(cyclopentyl-vinylether) beträgt 93 : 7.

### Vergleichsbeispiel 4

Analog der im Beispiel 4 beschriebenen Verfahrensweise wurden 9,5 g Perfluor-(n-propyl-vinylether) und 20,5 g Vinylidenfluorid copolymerisiert. Es wurden 19 g eines Copolymeren, das aus Einheiten von Vinylidenfluorid und Perfluor-(n-propyl-vinylether) besteht, isoliert. Das Copolymer ist in Dimethylformamid und Dimethylacetamid löslich. Die Grenzviskosität beträgt 0,7 dl/g (DMF, 25°C). Die chemische Zusammensetzung wurde ebenfalls durch ¹⁹F-Kernresonanzspektroskopie bestimmt. Das molare Verhältnis von Vinylidenfluorid zu Perfluor-(n-propyl-vinylether) beträgt 92 : 8.

An den entsprechend der vorgenannten Beispiele hergestellten Copolymerisaten wurden DSC- und thermogravimetrische (TGA) Analysen vorgenommen.
- Messungen:: TGA - Meßgerät TGS-2 (Perkin-Elmer);
Aufheizung mit 20 K/min unter Stickstoff von Raumtemperatur bis zur vollständigen Zersetzung.
DSC - Meßgerät DSC-2 (Perkin-Elmer);
zweimalige Aufheizung mit 20 K/min unter Helium von -50°C bis +200°C (Meßwerte aus 2. Aufheizung).

**Tabelle 1**

| Beisp. | T_{g}/°C | Tₘ/°C | Temp./°C für Gewichtsabbau von | | | | | |
|---|---|---|---|---|---|---|---|---|
| | (DSC) | (DSC) | 1% | 2% | 3% | 5% | 10% | >90% |
| 3 | - 8 | 162 | 280 | 354 | 373 | 389 | 406 | 800 |
| V-3 | -28,5 | 155 | 240 | 250 | 267 | 345 | 381 | 580 |
| 4 | -14 | 150 | 142 | 203 | 228 | 271 | 338 | 900 |
| V-4 | -33 | 148 | 111 | 164 | 213 | 261 | 402 | 672 |

### Beispiel 5

In einem 0,3 l-Autoklaven wurden 130 ml entionisiertes Wasser vorgelegt. Darin wurden 0,5 g Lithiumperfluoroctansulfonat gelöst. Mit Lithiumhydroxid wurde diese Lösung auf einen pH-Wert von etwa 10 eingestellt. Dann wurde der geschlossene Autoklav dreimal jeweils mit einem Stickstoffdruck von 10 bar beaufschlagt und anschließend auf Normaldruck entspannt. In den Autoklaven wurden 9,3 g Perfluor-(cyclopentyl-vinylether) und 30 g Chlortrifluorethylen gegeben und das Reaktionsgemisch unter Rühren auf 90°C erwärmt. Nach Erreichen dieser Temperatur wurden 20 g einer wässrigen Lösung, die 0,8 g Kaliumperoxidsulfat enthält, in den Autoklaven gedrückt. Nach einer Gesamtreaktionszeit von 1,5 h, in der der Reaktionsdruck von 19 auf 15,5 bar abnahm, wurde der Autoklaveninhalt abgekühlt und das nicht umgesetzte Gasgemisch abgelüftet. Das so erhaltene Reaktionsgemisch wurde zur vollständigen Koagulation in 130 ml einer 4 %igen wässrigen Magnesiumsulfatlösung gegossen. Das Produkt wurde mit Wasser gewaschen und dann getrocknet, wobei man 7,5 g eines Copolymeren bestehend aus Einheiten von Chlortrifluorethylen und Perfluor-(cyclopentylvinylether) erhielt. Das Copolymer ist in Dimethylformamid und Dimethylacetamid nicht löslich.

Anhand der Analysen des Chlor- und Fluorgehaltes wurde folgende Copolymerzusammenetzung bestimmt:

Chlortrifluorethylen/Perfluor-(cyclopentyl-vinylether) = 95/5 (Molverhältnis).

### Beispiel 6

Analog der im Beispiel 5 beschriebenen Verfahrensweise wurden 8,9 g Perfluor-(cyclopentyl-vinylether) und 60 g Chlortrifluorethylen 2 h bei 70°C copolymerisiert. Es wurden 26 g eines weißen Pulvers isoliert, welches als Copolymeres bestehend aus Einheiten von Chlortrifluorethylen und Perfluor-(cyclopentyl-vinylether) identifiziert wurde.

Anhand der Analysen des Chlor- und Fluorgehaltes wurde folgende Copolymerzusammensetzung bestimmt:
Chlortrifluorethylen/Perfluor-(cyclopentyl-vinylether) = 98/2 (Molverhältnis)

### Vergleichsbeispiel zu Beispiel 6

Analog der im Beispiel 6 beschriebenen Verfahrensweise wurden 15 g des nach dem Vergleichsbeispiel 1b hergestellten Perfluor-(cyclopentyl-vinylethers), der nach dieser Verfahrensvariante nur in 55 %iger Reinheit bereitgestellt werden konnte, und 60 g Chlortrifluorethylen 6 h bei 70°C copolymerisiert. Es wurde neben 0,2 g eines beigefarbenen Koagulates 11 g eines ockerfarbenen Pulvers aus der Emulsion isoliert, das neben im Copolymer gebundenen Einheiten von Chlortrifluorethylen und Perfluor-(cyclopentyl-vinylether) große Mengen nicht weiter identifizierter Verunreinigungen enthält.

| | Beispiel 6 | Vergleichsbeispiel 6 |
|---|---|---|
| Ausbeute | 43 % in 2 h | 22 % in 6 h |
| Aussehen | weißes Pulver | ockerfarbenes Pulver + beigefarbenes Koagulat |

## Patentansprüche

1. Thermoplastische Fluorcopolymere erhalten durch Copolymerisation von
a) 99,5 bis 50 Mol-% mindestens eines Ethylens mit 1 bis 4 Fluoratomen, und
b) 0,5 bis 50 Mol-% mindestens eines Perfluor(cycloalkyl-vinylethers) der Formel I 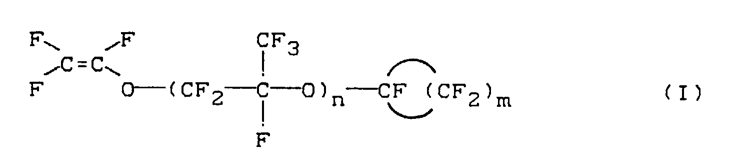 mit
n = 0,1 oder 2
m = 3, 4 oder 5
sowie
c) 0 - 40 Mol-% mindestens eines weiteren Comonomeren aus der Gruppe von Ethylen, Propylen und mindestens ein Fluoratom enthaltenden gradkettigen oder verzweigten C₃-bis C₈-Alkenen.

2. Verfahren zur Herstellung thermoplastischer Fluorcopolymere nach Anspruch 1, dadurch gekennzeichnet, daß der Perfluor-(cycloalkylvinylether) der Formel I hergestellt wird aus den ensprechenden 2-Cycloalkoxypropancarbonsäurefluoriden gemäß der nachfolgenden Formel II 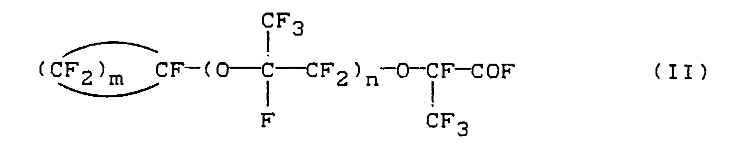 in dem diese in einem geeigneten Lösungsmittel, das ein salzbildendes Mittel enthält, in Gegenwart einer katalytischen Menge von N,N-Dimethylformamid langsam bis zu einer Temperatur von 110 - 140°C erhitzt wird, bei einer Temperatur ab 100 - 120°C ein Destillat entsprechend einer Kondensationstemperatur zwischen 60 und 90°C abgezogen wird; und das Destillat bei Normaldruck redestilliert wird.

## Claims

1. Thermoplastic fluorocopolymers obtained by copolymerisation of
a) from 99.5 to 50 mol-% of at least one ethylene having 1 to 4 fluorine atoms, and
b) from 0.5 to 50 mol-% of at least one perfluorocycloalkyl vinyl ether corresponding to formula I 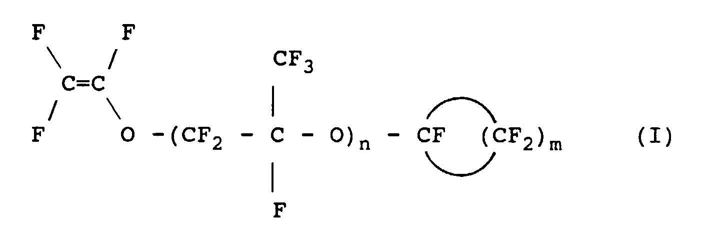 wherein
n = 0, 1 or 2
m = 3, 4 or 5
and
c) from 0 to 40 mol-% of at least one other comonomer selected from ethylene, propylene and straight-chain or branched C₃- to C₈- alkenes containing at least one fluorine atom.

2. Process for the preparation of thermoplastic fluorocopolymers according to claim 1, characterised in that the perfluorocycloalkyl vinyl ether corresponding to formula I is prepared from the corresponding 2-cycloalkoxypropanecarboxylic acid fluorides corresponding to the following formula II 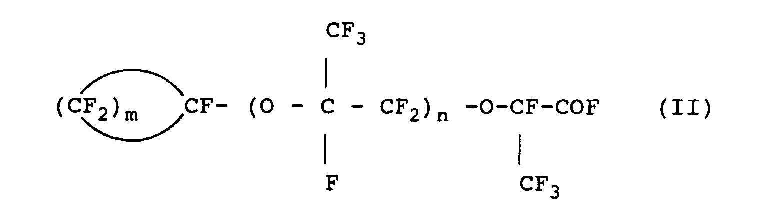 by slowly heating these to a temperature of from 110°C to 140°C in a suitable solvent containing a salt-forming agent in the presence of a catalytic quantity of N,N-dimethylformamide, withdrawing a distillate corresponding to a condensation temperature of between 60°C and 90°C at a temperature of from 100°c to 120°C, and redistilling the distillate at normal pressure.

## Revendications

1. Copolymères fluorés thermoplastiques obtenus par copolymérisation de
a) 99,5 à 50 mol% d'au moins un éthylène contenant 1 à 4 atomes de fluor et
b) 0,5 à 50 mol% d'au moins un éther perfluoro(cycloalkyl-vinylique) de formule I 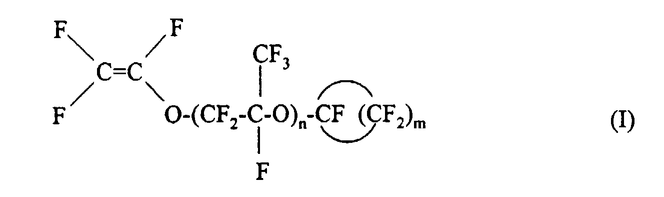 dans laquelle
n = 0, 1 ou 2
m = 3, 4 ou 5,
c) 0 à 40 mol% d'au moins un autre comonomère pris dans le groupe formé par l'éthylène, le propylène et les alcènes à chaîne droite ou ramifiée en C₃-C₈ contenant au moins un atome de fluor.

2. Procédé de préparation des copolymères fluorés thermoplastiques selon la revendication 1, caractérisé en ce que l'éther perfluoro(cycloalkylvinylique) de formule I est préparé à partir des fluorures d'acides 2-cycloalcoxypropanecarboxyliques correspondants de formule II 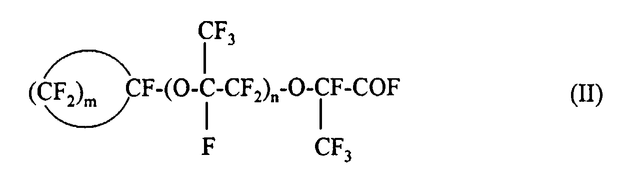 qu'on chauffe lentement jusqu'à une température de 110 à 140°C dans un solvant approprié contenant un agent salifiant en présence d'une quantité catalytique de N,N-diméthylformamide, en éliminant à partir d'une température de 100 à 120°C un distillat correspondant à une température de condensation de 60 à 90°C et en redistillant ce distillat à pression normale.
